# EUROPEAN PATENT APPLICATION

(11) **EP 1 978 772 A1**
(43) Date of publication of application: **08.10.2008**
(21) Application number: 07251454.0
(22) Date of filing: 02.04.2007
(51) Int. Cl.: H04Q 7/38, H04L 29/06

(54) **Authentication policy**

(71) Applicant: British Telecommunications Public Limited Company, London EC1A 7AJ (GB)
(72) Inventor: The designation of the inventor has not yet been filed
(74) Representative: Sayer, Robert David

(57) **Abstract**

A method of managing an authentication policy in a mobile telecommunications device, wherein the mobile telecommunications device comprises a plurality of security module applications, said method comprising the steps of: providing a profile associated with each of the plurality of security module applications, wherein each profile identifies at least one network with which the associated security module application can be used to enable communications; generating an authentication table based on the plurality of profiles provided, wherein said authentication table specifies each of the networks identified in the profiles provided and associates with each of the networks identified an application identifier, wherein each application identifier corresponds to one of the security module applications; and determining, based on the authentication table, one of the plurality of security module applications to use to enable communications with a network identified by the mobile telecommunications device.

## Description

### Field of the Invention

The present invention relates to a method of managing security modules in mobile devices, in particular a method of managing network authentication profiles in multiple security modules for connecting to multiple networks.

### Background to the Invention

Provision of communications services in mobile cellular networks, such as GSM and UMTS, are based upon a key sharing principle, where a secure smart card, a SIM (subscriber identity module), is used in a mobile device to store subscriber details, applications as well as an authentication key. Specifically, the subscriber details are stored in a SIM application resident on the SIM card and include an international mobile subscriber identity (IMSI), an authentication key Ki, as well as various operator secrets and other applications for handling authentication and encryption of communications data.

The SIM application is thus the core element that enables network identification i.e. it enables network operators to identify and subsequently authenticate a subscriber. In addition to the subscriber details and authentication keys used for identification and authentication, also programmed into the SIM application are the network operator's Mobile Country Code (MCC) and Mobile Network Code (MNC). These provide a reference to the network operator with which the SIM card can be used. Usually, the SIM application has a list of "preferred networks" with which it can connect, listing the MNC associated with each of the "preferred networks". Also commonly found is a list of "barred networks" with lists all the MNCs with which a SIM application should never be used with.

When the mobile device is switched on, the device scans the MNC list stored on the SIM application and at the same time scans all the GSM frequency bands the device can receive. Any networks operating in the area of the mobile device will be broadcasting their MNC over a broadcast channel. The mobile device determines all the available networks broadcasting in the area and attempts to connect to the MNC highest up on the preferred networks list. This is usually the MNC corresponding to home network of the SIM application i.e. the network belonging to the network operator that issued the SIM card.

The other MNCs on the preferred network list usually relate to other network operators for use when the subscriber "roams" in a different country for example.

Whilst a user can usually swap SIM cards in and out of a device to give access to multiple networks, there are no provisions to manage multiple simultaneously active SIM cards in a single device. In particular, existing solutions are based on the fact that there is only one active SIM in a device at any given time. Furthermore, the SIM functionality provided by a SIM card is actually provided for by the SIM application. In practice, there can also be multiple SIM applications resident on a single card, each capable of providing network access to different networks and supporting distinct applications. These multiple SIM applications, either on a single SIM card or across multiple SIM cards, need to be managed efficiently in order for services to be delivered to the user effectively, in particular in relation to access to different networks.

### Summary of the Invention

It is the aim of embodiments of the present invention to address one or more of the above-stated problems.

According to a first aspect of the present invention, there is provided a method of managing an authentication policy in a mobile telecommunications device, wherein the mobile telecommunications device comprises a plurality of security module applications, said method comprising the steps of:
i) providing a profile associated with each of the plurality of security module applications, wherein each profile identifies at least one network with which the associated security module application can be used to enable communications;
ii) generating an authentication table based on the plurality of profiles provided, wherein said authentication table specifies each of the networks identified in the profiles provided and associates with each of the networks identified an application identifier, wherein each application identifier corresponds to one of the security module applications;
iii) determining, based on the authentication table, one of the plurality of security module applications to use to enable communications with a network identified by the mobile telecommunications device.

The security module applications may be subscriber identity module, or SIM applications, and the SIM applications may be located on a SIM card.

The profiles in the security module applications can identify a list of preferred networks with which the security module application is able to operate. These identified networks are listed by a network type element and a network identifier element. For example, the network type may be GSM, and the network identifier may be the mobile network code (MNC) of the particular GSM network.

Preferably, the network broadcasts a network identifier and the mobile telecommunications device uses the network identifier to identify the network.

The profiles may be stored with the associated security module application, and preferably on a SIM card.

Preferably, the step of generating comprises combining each of the profiles and adding to each network identified in each profile the application identifier corresponding to security module application associated with the profile.

According to a second aspect of the present invention, there is provided a mobile telecommunications device comprising a plurality of security module applications, wherein each security module application is providing with a profile and each profile identifies at least one network with which the associated security module application can be used to enable communications, said mobile telecommunications device further comprising:
a processor for generating an authentication table based on the plurality of profiles provided, wherein said authentication table specifies each of the networks identified in the profiles provided and associates with each of the networks identified an application identifier, wherein each application identifier corresponds to one of the security module applications; and wherein said mobile device is adapted to determine, based on the authentication table, one of the plurality of security module applications to use to enable communications with a network identified by the mobile telecommunications device.

As the mobile device has several network connection means allowing connection to several networks at the same time (e.g. GSM, WiFi, Bluetooth), the ability to effectively and conveniently manage such connectivity is very important.

By having a device that can accept several SIM cards, or more particularly to manage several simultaneously active SIM applications in the device at the same time, authentication and connectivity to different networks at the same time is possible.

Furthermore, SIM cards and SIM applications from different operators that are potentially competing on the marketplace can co-exist within a single device for the benefit of the user.

The device can also implement a 'best connected' policy for optimising connectivity so that it is always connected in a manner that is beneficial for the user. Such a policy can be fully automated and does not require any intervention for the user, thus improving usability and delivering true seamless roaming experience.

Embodiments of the present invention also allow for SIM cards and SIM applications implemented in the device in different formats (e.g. on a standard SIM card, in software only, within some other trusted hardware module, on memory card), thus increasing flexibility of operator's provisioning methods.

### Brief Description of the Drawings

For a better understanding of the present invention reference will now be made by way of example only to the accompanying drawings, in which:
Figure 1 is a simplified diagram of a SIM card showing two separate SIM applications in an embodiment of the present invention;
Figure 2 is a diagram showing a mobile device and a plurality of SIM applications and their associated profile files in an embodiment of the present invention;
Figure 3 is a table showing the format of an authentication policy in an embodiment of the present invention;
Figure 4 is a network diagram showing an arrangement in which an embodiment of the present invention can be utilised with three different networks.

### Description of the Preferred Embodiments

The present invention is described herein with reference to particular examples. The invention is not, however, limited to such examples.

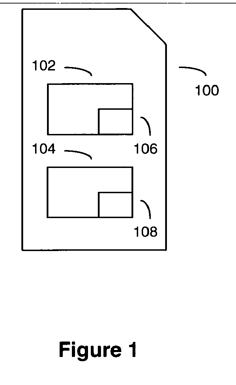

Figure 1 shows a SIM card 100 holding two SIM applications, SIM_app_1 102 and SIM_app_2 104. Each SIM application holds separate subscriber details such as an IMSI, authentication key Ki, and other unique parameters. Each SIM application is also provided with an authentication profile file. SIM_app_1 102 includes authentication profile file 106 and SIM_app_2 includes authentication profile 108.

Each of the authentication profile files list details of the network type and network ID that the corresponding SIM application can be used in. The network type details the type of network the SIM can be used in such as a GSM network, a WiFi network or a Bluetooth network. The network type can be specified by name or preferably by the broadcast frequency or frequency band of the network. The network ID uniquely identifies the specific network within the network type or frequency band. For example, the network ID may be specified by the mobile network code (MNC) if the network type is a GSM network, or the network ID may be a service set identifier (SSID) if the network type is a WiFi network.

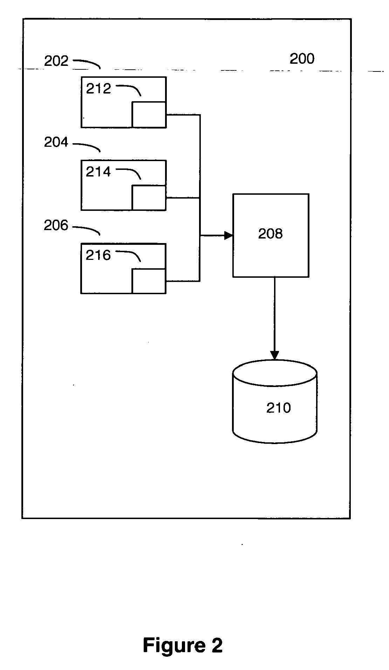

Figure 2 shows a mobile device 200, such as a smart phone, having multiple network access means. The mobile device 200 can access the various communications networks such as GSM mobile networks, WiFi network and also has Bluetooth access. Mobile device 200 also includes two SIM cards. The SIM cards are not shown in the Figure, but the SIM applications that are resident on the SIM cards are shown. In this example, the first SIM card (not shown) holds two SIM applications, which are shown as SIM_A_1 202 and SIM_A_2 204. The first SIM card may be issued by network operator A, and the associated SIM applications are enabled for use with networks controlled by network operator A.

The other SIM card (not shown) has only one SIM application, SIM_B_1 206. The other SIM card may be issued by network operator B, and the Slm application therein for use with networks run by network operator B.

Each SIM application also has a corresponding authentication profile file. SIM_A_1 202 has authentication profile file File_A_1 212, SIM_A_2 204 has authentication profile file File_A_2 214 and SIM_B_1 206 has authentication profile file File_B_1 216. The authentication profile file includes a list of networks that the SIM application can be used with, where the network is specified by a network type field and a network ID field as described in relation to Figure 1 above.

In this example, File_A_1 212 has entries for one network identified by "GSM 900, MNC 200", where GSM 900 is the network type and MNC 200 is the network ID, and similarly another network identified by "WiFi, SSID 1111". File_A_2 214 has entries for the network "WiFi, SSID 1111". File_B_1 216 has entries for "GSM 1800, MNC 300".

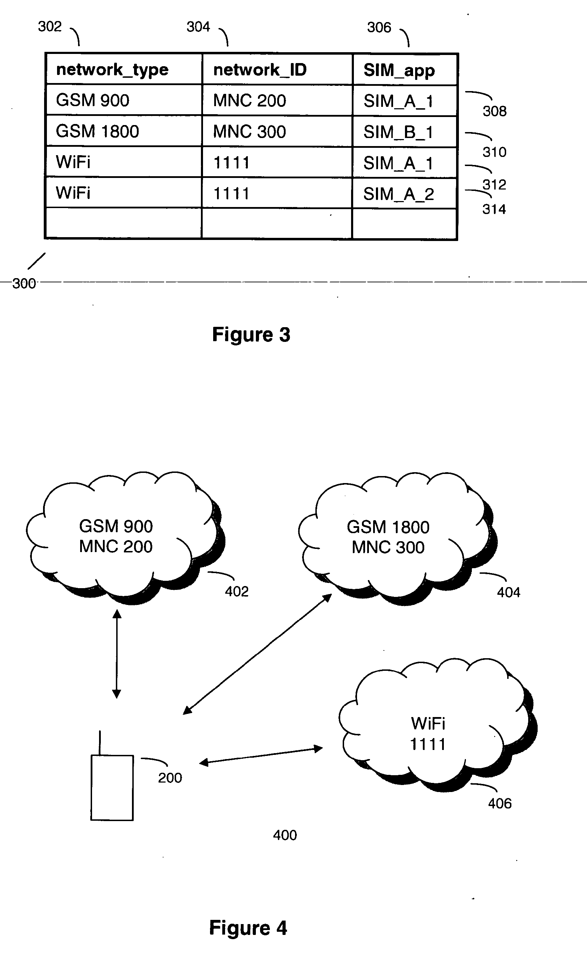

The mobile device 200 also includes a processor 208 for handling the SIM applications and processing the authentication profile files. When the mobile device 200 is first switched on, the processor detects the presence of the different SIM applications and starts reading the authentication profile files. The processor 208 then takes the details of the networks listed in the authentication profile file and generates an authentication policy table 300 as shown in Figure 3.

The authentication policy table 300 has a network_type field 302, a network_ID field 304 and a SIM_app field 306. Four entries 308, 310, 312 and 314 are shown in the policy table 300 based on the entries from the authentication profile files collected from the SIM applications by the processor 208. Each entry includes the network type and network_ID as taken from the individual authentication profile files 212, 214 and 216. Also included in each entry is a reference to the SIM application to which the entry corresponds under the SIM_app field 306.

The authentication policy table 300 is stored locally on the mobile device in data store 210, such as RAM or flash memory, and is used by the mobile device 200 to automatically determine which SIM application to use for a network connection.

Figure 4 shows a network arrangement 400 including a mobile device 200 loaded with the SIM applications and authentication policy table 300 described above. Figure 4 shows 3 different networks: a GSM network 402, another GSM network 404 and a WiFi network 406. After the mobile device 200 has been activated and generated the authentication policy table 300 as described above, the mobile device starts scanning for the available networks. The mobile device 200 detects GSM network 402, GSM network 404 and WiFi network 406. The mobile device then scans each of these networks further to determine the network type and/or the network ID. In many cases the network type is automatically determined depending on which receiver the mobile device 200 has used to scan for networks e.g. network 402 is detected using a GSM receiver in the mobile device 200 and thus is automatically determined as a GSM network.

The network ID associated with each network may be broadcasted over a general broadcast channel that can be received by the mobile device 200 or any similar device equipped with a suitable receiver. In this example, the GSM network 402 is identified as having a network ID (in this case a mobile network code MNC) of 200. Similarly, the GSM network 404 is identified as having a network ID of 300. The mobile device 200 also scans the WiFi channels of WiFi network 406 and determines that the network ID, the SSID of the router, is 1111.

The processor 208 in the mobile device 200 then uses the authentication profile table 300 to determine which SIM application it should use to connect to which network. The processor 208 determines that GSM network 402 with a network ID of 200 can only be connected to using SIM application SIM_A_1 (see 308 of Figure 3) which is associated with the same network type and identifier. The processor 208 also determines that GSM network 404 with a network ID of 200 can only be connected to using SIM application SIM_B_1 (see 310 of Figure 3) which is associated with the same network type and identifier. However, for WiFi network 406 which has a network ID of 1111, either SIM application SIM_A_1 or SIM_A_2 can be used to connect. In such cases, the processor 208 can employ a suitable resolution method, for example giving priority to one of the applications which the user has previously defined as being the preferred application.

In practice, it may also only be possible to connect to one network of any one type at a time, due to limitations on receivers unless the mobile device 200 includes more than one receiver. So in this example, the mobile device 200 can only connect to one of the GSM networks 402 or 404 at any given time. The determination of which one to connect to can be resolved again by providing a priority to the SIM applications and network IDs. Assuming that each network ID for each SIM application is given a priority, then in the event of any conflict in network type where the device can only connect to one network of a given network type, or if there is a conflict between SIM applications for a given network, then the priority is used to determine which network or SIM application to use in each respective situation. The priorities can be represented in the authentication policy table by the order in which the entries are listed.

After the mobile device 200 has used the authentication policy table 300 to determine that SIM application SIM_A_1 should be used to connect to the GSM network 402, the mobile device can use the subscriber details, such as the IMSI, stored on SIM_A_1 to register and authenticate with the network 402. The process of authentication will include verification of the SIM application where the network 402 issues a challenge to the authentication key Ki stored at the SIM application. The response generated by the SIM application is checked against a response generated by the network based on a copy of the authentication key Ki stored in the network.

The authentication profile file associated with each SIM application can be preloaded with the preferred network details when the SIM card is loaded with the SIM applications during manufacture. Furthermore, the authentication profile file can be modified by the network operator over the network to add or delete network details.

More complex policies that include e.g. a history of connections, presence of other networks, availability of billing information or current time can be deployed as well. Specifically, policies that are used to determine the selection of the network can be remotely updated, independently from the update of authentication profile files.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of managing an authentication policy in a mobile telecommunications device, wherein the mobile telecommunications device comprises a plurality of security module applications, said method comprising the steps of:
i) providing a profile associated with each of the plurality of security module applications, wherein each profile identifies at least one network with which the associated security module application can be used to enable communications;
ii) generating an authentication table based on the plurality of profiles provided, wherein said authentication table specifies each of the networks identified in the profiles provided and associates with each of the networks identified an application identifier, wherein each application identifier corresponds to one of the security module applications;
iii) determining, based on the authentication table, one of the plurality of security module applications to use to enable communications with a network identified by the mobile telecommunications device.

2. A method according to claim 1, wherein each network identified in the profiles comprises a network type element and a network identifier element.

3. A method according to claim 1 or claim 2, wherein each security module application is a subscriber identity module application.

4. A method as claimed in any preceding claim, wherein the mobile telecommunications device uses a network identifier broadcast by the network to identify the network.

5. A method as claimed in any preceding claim, wherein each profile is stored with the associated security module application.

6. A method as claimed in any preceding claim, wherein the step of generating comprises combining each of the profiles and adding to each network identified in each profile the application identifier corresponding to security module application associated with the profile.

7. A method as claimed in any preceding claim wherein the security module application is located on a tamper proof security module.

8. A method as claimed in claim 7, wherein the tamperproof security module is a subscriber identity module.

9. A mobile telecommunications device comprising a plurality of security module applications, wherein each security module application is providing with a profile and each profile identifies at least one network with which the associated security module application can be used to enable communications, said mobile telecommunications device further comprising:
a processor for generating an authentication table based on the plurality of profiles provided, wherein said authentication table specifies each of the networks identified in the profiles provided and associates with each of the networks identified an application identifier, wherein each application identifier corresponds to one of the security module applications; and wherein said mobile device is adapted to determine, based on the authentication table, one of the plurality of security module applications to use to enable communications with a network identified by the mobile telecommunications device.
